# EUROPÄISCHE PATENTANMELDUNG

(11) **EP 2 845 722 A1**
(43) Veröffentlichungstag der Anmeldung: **11.03.2015**
(21) Anmeldenummer: 13182963.2
(22) Anmeldetag: 04.09.2013
(51) Int. Cl.: B30B 9/30, C05F 17/02

(54) **Kompostiervorrichtung**

(71) Anmelder: Buttazoni Gesellschaft m.b.H., 9562 Himmelberg (AT)
(72) Erfinder: Buttazoni, Armin, 9562 Himmelberg (AT)
(74) Vertreter: Sticht, Andreas

(57) **Zusammenfassung**

Es wird eine Kompostiervorrichtung (10) bereitgestellt, bei welcher zu kompostierendes Material in einen Behälter (28) gefüllt wird und mit einem Pressmechanismus (29, 30) komprimiert werden kann, insbesondere um eine Verrottung unter Luftabschluss zu erreichen. Der Pressmechanismus (29, 30) wird dabei mittels zugeführtem Wasser, beispielsweise über einen Gartenschlauch (20) zugeführtes Wasser, betrieben.

## Beschreibung

Die vorliegende Anmeldung betrifft eine Kompostiervorrichtung, auch kurz als Komposter bezeichnet. Insbesondere betrifft die vorliegende Erfindung Kompostiervorrichtungen, welche eine Erzeugung von Kompost durch Fermentation unter Luftabschluss ermöglichen.

Kompostiervorrichtungen dienen allgemein dazu, aus biologischen Abfällen, beispielsweise Gartenabfällen oder Küchenabfällen, durch Verrottung Kompost herzustellen. Dieser Kompost beinhaltet viele Nährstoffe und kann dann mit Erde vermengt werden, um Komposterde zu erzeugen, welche sich beispielsweise hervorragend für Wachstum von Gemüse, Salaten, Kräutern oder Blumen eignet.

Für Privathaushalte, beispielsweise für den Einsatz in privaten Gärten, werden Kompostiervorrichtungen größtenteils als einfache Behälter für Gartenabfälle und Küchenabfälle angeboten. Diese Behälter werden beispielsweise aus Kunststoff, Holz, Metall oder Ziegelwerk hergestellt. Vereinzelt werden auch Kompostiervorrichtungen mit einem Mehrkammersystem angeboten.

Bei den meisten dieser Kompostiervorrichtungen erfolgt die Verrottung, d.h. die Umwandlung der Abfälle in Kompost, durch Fäulnis. Hierzu weisen die Kompostiervorrichtungen Luftöffnungen zur Zufuhr von Luft auf. Durch die Luftzufuhr werden die biologischen Abfälle zur Fäulnis gebracht. Dabei kann es mehrere Jahre dauern, bis die Verrottung beendet ist. Zudem entwickelt sich teilweise ein starker Fäulnisgeruch, welcher insbesondere in privaten Gärten unerwünscht ist. Zudem sind in so hergestelltem Kompost häufig viele Eier von nicht erwünschten Lebewesen wie Schnecken, Kohlfliegen, Engerlingen und dergleichen enthalten, welche dann bei Verwendung des Komposts in Beeten und dergleichen schlüpfen können.

Eine Alternative zu der Verrottung durch Fäulnis ist die Verrottung durch Fermentation unter Zugabe von Mikroorganismen und unter Luftabschluss. Die Dauer der Verrottung durch Fermentation liegt typischerweise im Bereich von 2 bis 4 Monaten, und der so entstehende Kompost ist zumindest nahezu frei von Eiern unerwünschter Lebewesen. Zudem entstehen wesentlich weniger Gerüche, vor allem keine Fäulnisgerüche, sondern lediglich ein typischer säuerlicher Geruch der Fermentation.

Allerdings ist für den Luftabschluss, insbesondere für ein möglichst weitgehendes Entfernen von Luft aus den biologischen Abfällen, ein höherer technischer Aufwand nötig. Hierfür verwendete Geräte benötigen herkömmlicherweise Strom. Gerade in privaten Gärten ist jedoch eine Verlegung von Stromleitungen aufwändig und auch mit gewissen Sicherheitsrisiken (Stromschlag) verbunden.

Es ist daher eine Aufgabe der vorliegenden Erfindung, eine Kompostiervorrichtung bereitzustellen, welche eine Verrottung durch Fermentation ermöglicht und welche auch in privaten Gärten problemlos betreibbar ist.

Diese Aufgabe wird gelöst durch eine Kompostiervorrichtung nach Anspruch 1. Die Unteransprüche definieren weitere Ausführungsbeispiele.

Erfindungsgemäß wird eine Kompostiervorrichtung bereitgestellt, umfassend:
einen Behälter zum Aufnehmen von zu kompostierendem Material,
einen Wasseranschluss zum Zuführen von Wasser,
einen Wasserablass zum Ablassen von Wasser,
einen Pressmechanismus zum Komprimieren von in dem Behälter befindlichen Material, und
einen Schaltmechanismus zum wahlweisen Zuführen von Wasser von dem Wasseranschluss zu dem Pressmechanismus und zum wahlweisen Ablassen von Wasser aus dem Pressmechanismus zu dem Wasserablass derart, dass der Pressmechanismus wahlweise zwischen einer ersten Position, in welcher das Material komprimiert wird, und einer zweiten Position zum Befüllen des Behälters bewegt wird.

Bei einer derartigen erfindungsgemäßen Kompostiervorrichtung wird also ein Pressmechanismus, mit welchem beispielsweise Luft aus dem kompostierbaren Material durch Herauspressen entfernt werden kann, mit von außen zugeführtem Wasser betrieben. Hierfür kann beispielsweise ein Gartenschlauch als Zufuhr verwendet werden, welcher in privaten Gärten üblicherweise zur Verfügung steht. Somit ist kein aufwändiger Stromanschluss und dergleichen nötig. Das Wasser geht dabei nicht verloren, sondern kann über den Wasserablass entnommen werden und beispielsweise zur Bewässerung des Gartens verwendet werden. Der Schaltmechanismus kann dabei als rein mechanischer Schalter, welcher keinen Strom benötigt, ausgestaltet sein. Bei anderen Ausführungsbeispielen kann ein geringer Strom, welcher beispielsweise durch eine Batterie geliefert werden kann, verwendet werden.

Für den Schaltmechanismus und andere wasserführende Komponenten werden bevorzugt rostfreie Materialien verwendet.

Die Kompostiervorrichtung kann eine schließbare Befüllöffnung mit einer Abdeckung aufweisen, um zu kompostierendes Material in den Behälter einzubringen. Dabei kann ein Sicherheitsschalter vorgesehen sein, welcher bewirkt, dass bei einem geöffneten Zustand der Befüllöffnung der Pressmechanismus nicht bewegt werden kann. Zudem kann ein Mechanismus bereitgestellt sein, welcher verhindert, dass kompostierbares Material in den Behälter eingebracht wird, wenn sich der Pressmechanismus in dem ersten Zustand befindet. Hierzu kann beispielsweise ein Verschlusselement bereitgestellt sein, welches in dem ersten Zustand des Pressmechanismus die Befüllöffnung des Behälters verschließt und in dem zweiten Zustand des Pressmechanismus die Befüllöffnung freigibt. Die Schließplatte kann dabei zusammen mit dem Pressmechanismus bewegt werden.

Der Pressmechanismus kann einen Zylinder, einen Kolben und eine mit dem Kolben verbundene Platte aufweisen, welche durch Zuführen von Wasser zu und Ablassen von Wasser aus dem Zylinder gehoben und gesenkt werden kann, wobei beispielsweise eine gesenkte Position der Platte der ersten Position des Pressmechanismus und eine gehobene Position der Platte der zweiten Position des Pressmechanismus entspricht. Beispielsweise kann zum Heben Wasser zu einem unteren Teil des Zylinders zugeführt werden und zum Senken Wasser zu einem oberen Teil des Zylinders zugeführt werden. Aus dem jeweils anderen Teil (unteren Teil bzw. oberen Teil) kann dann jeweils Wasser abgelassen werden. Ein Zylinderquerschnitt kann dabei so gewählt sein, dass mit typischen Drücken von Gartenschläuchen eine Bewegung erzeugt werden kann.

Ein Gewicht der Platte des Pressmechanismus ist dabei bevorzugt so gewählt, dass in dem gesenkten Zustand der Platte auch ohne weitere Wasserzufuhr ein hinreichendes Komprimieren des zu kompostierenden Materials erreicht wird. Hierzu kann die Masse der Platte beispielsweise zwischen 15 kg und 60 kg, bevorzugt zwischen 15 kg und 30 kg betragen, wobei die gewählte Masse auch von den Dimensionen der Kompostiervorrichtung abhängen kann. Dies bewirkt, dass nach dem Zuführen von kompostierbarem Material und dem Komprimieren beispielsweise ein Gartenschlauch von dem Wasseranschluss entfernt werden kann und für andere Zwecke verwendet werden kann.

Die Erfindung wird nachfolgend anhand von Ausführungsbeispielen unter Bezugnahme auf die beigefügten Zeichnungen näher erläutert. Es zeigen:
Fig. 1 eine Draufsicht auf eine Kompostiervorrichtung gemäß einem Ausführungsbeispiel in einem Zustand, in dem die Kompostiervorrichtung befüllt werden kann,
Fig. 2 eine Seitenansicht der Kompostiervorrichtung der Fig. 1 aus einer Richtung A der Fig. 1,
Fig. 3 eine Seitenansicht der Kompostiervorrichtung der Fig. 1 aus einer Richtung B der Fig. 1,
Fig. 4 eine Seitenansicht der Kompostiervorrichtung der Fig. 1 aus einer Richtung C der Fig. 1,
Fig. 5 eine Seitenansicht der Kompostiervorrichtung der Fig. 1 aus einer Richtung D der Fig. 1,
Fig. 6 eine Perspektivansicht der Kompostiervorrichtung der Fig. 1,
Fig. 7 eine weitere Perspektivansicht der Kompostiervorrichtung der Fig. 1,
Fig. 8 eine perspektivische Schnittansicht der Kompostiervorrichtung der Fig. 1,
Fig. 9 eine Draufsicht auf die Kompostiervorrichtung der Fig. 1 in einem Zustand, in welchem kompostierbares Material komprimiert wird,
Fig. 10 eine Seitenansicht der Kompostiervorrichtung der Fig. 9 aus einer Richtung A der Fig. 9,
Fig. 11 eine Seitenansicht der Kompostiervorrichtung der Fig. 9 aus einer Richtung B der Fig. 9,
Fig. 12 eine Seitenansicht der Kompostiervorrichtung der Fig. 9 aus einer Richtung C der Fig. 9,
Fig. 13 eine Seitenansicht der Kompostiervorrichtung der Fig. 9 aus einer Richtung D der Fig. 9,
Fig. 14 eine Perspektivansicht der Kompostiervorrichtung der Fig. 9,
Fig. 15 eine weitere Perspektivansicht der Kompostiervorrichtung der Fig. 9,
Fig. 16 eine perspektivische Schnittansicht der Kompostiervorrichtung der Fig. 9, und
Fig. 17 eine Ansicht eines Schaltmechanismus und eines Teils eines Pressmechanismus gemäß einem Ausführungsbeispiel.

Im Folgenden werden Ausführungsbeispiele näher erläutert. Diese Ausführungsbeispiele sind lediglich als Beispiel anzusehen und dienen der Veranschaulichung, sollen den Bereich der Erfindung jedoch nicht einschränken.

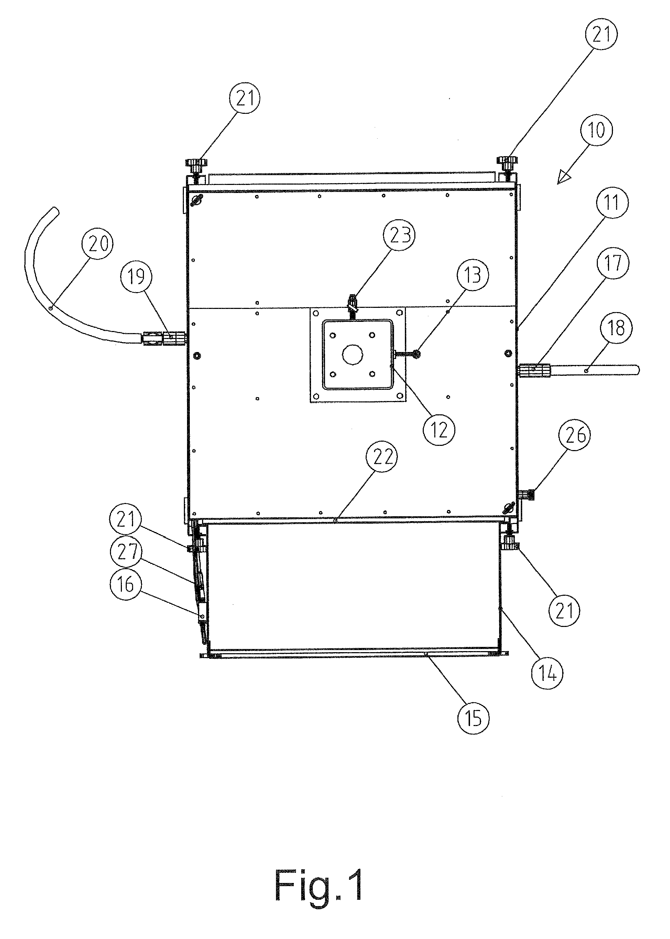

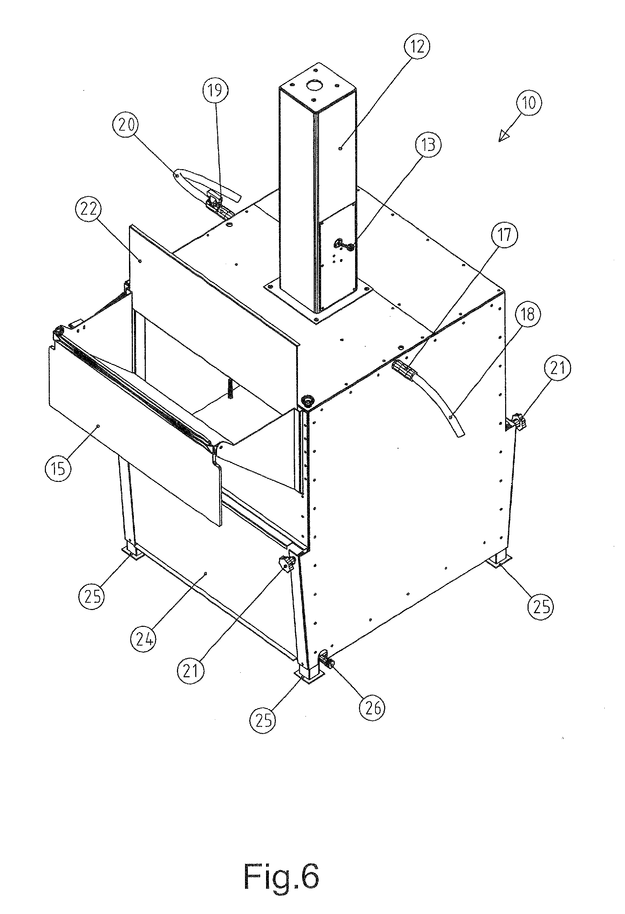

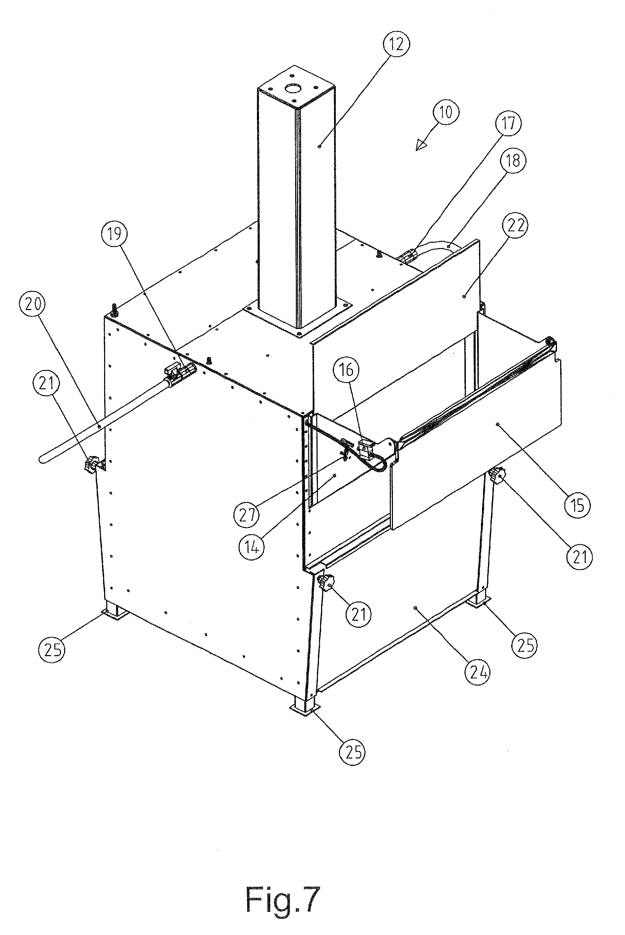

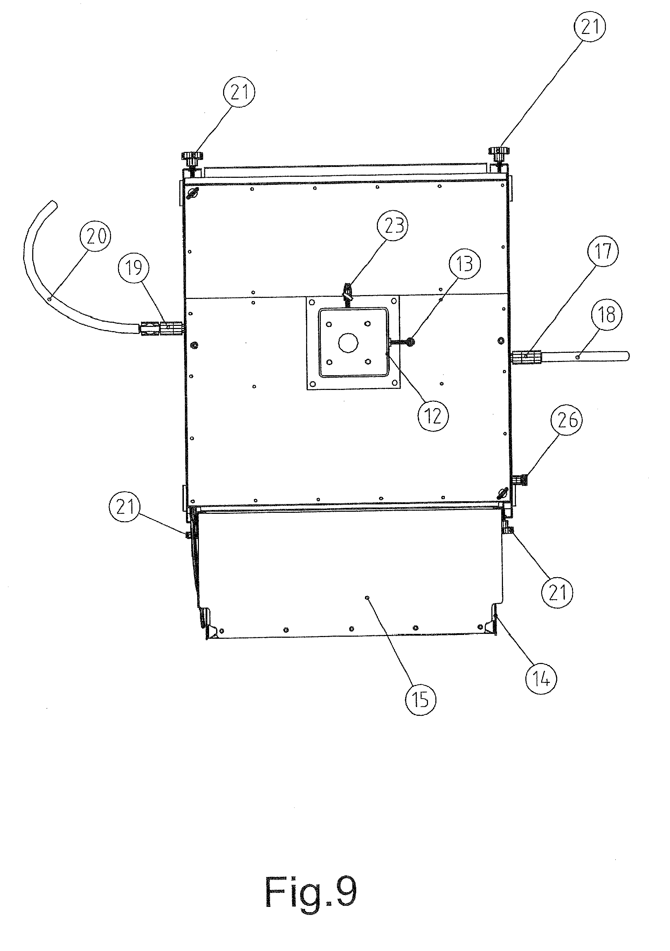

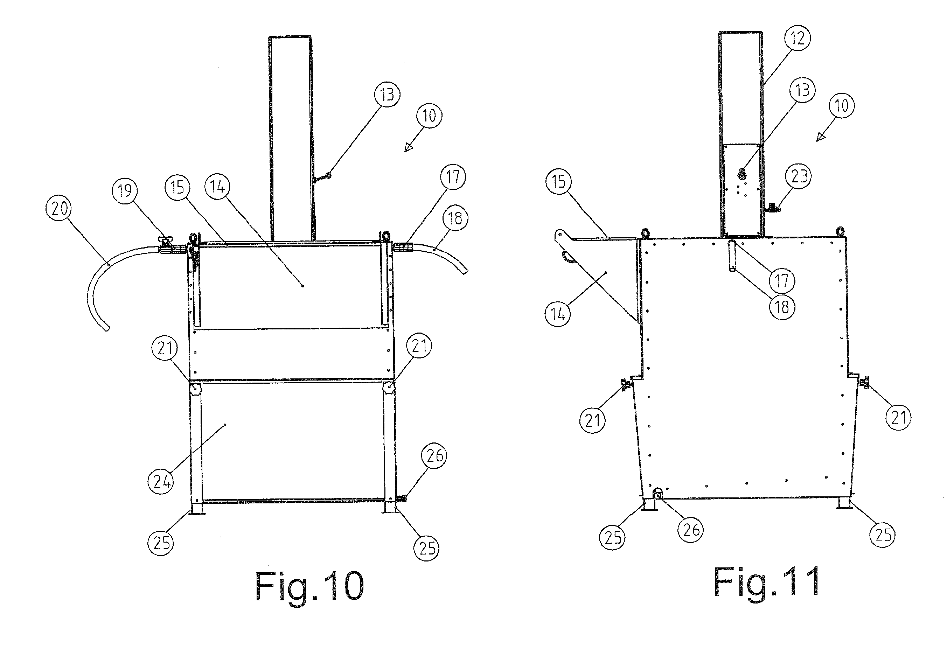

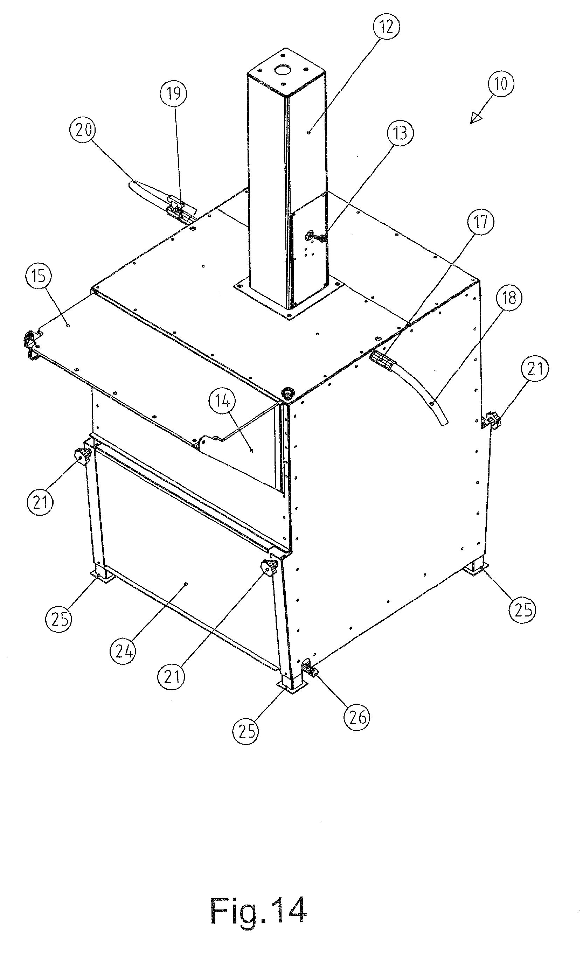

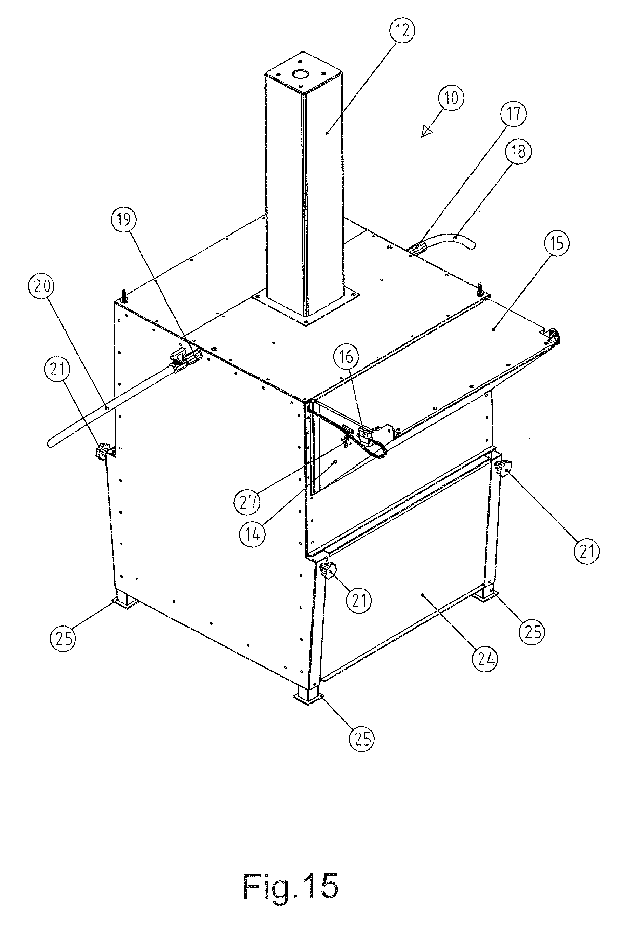

Insbesondere zeigen die Fig. 1-16 verschiedene Ansichten einer Kompostiervorrichtung gemäß einem Ausführungsbeispiel der vorliegenden Erfindung. Dabei zeigen die Fig. 1-8 verschiedene Ansichten der Kompostiervorrichtung in einem Zustand, in welchem der Kompostiervorrichtung zu kompostierendes Material zugeführt werden kann. Die Fig. 9-16 zeigen Ansichten entsprechen den Ansichten der Fig. 1-8 in einem Zustand, in welchem in der Kompostiervorrichtung befindliches Material komprimiert wird.

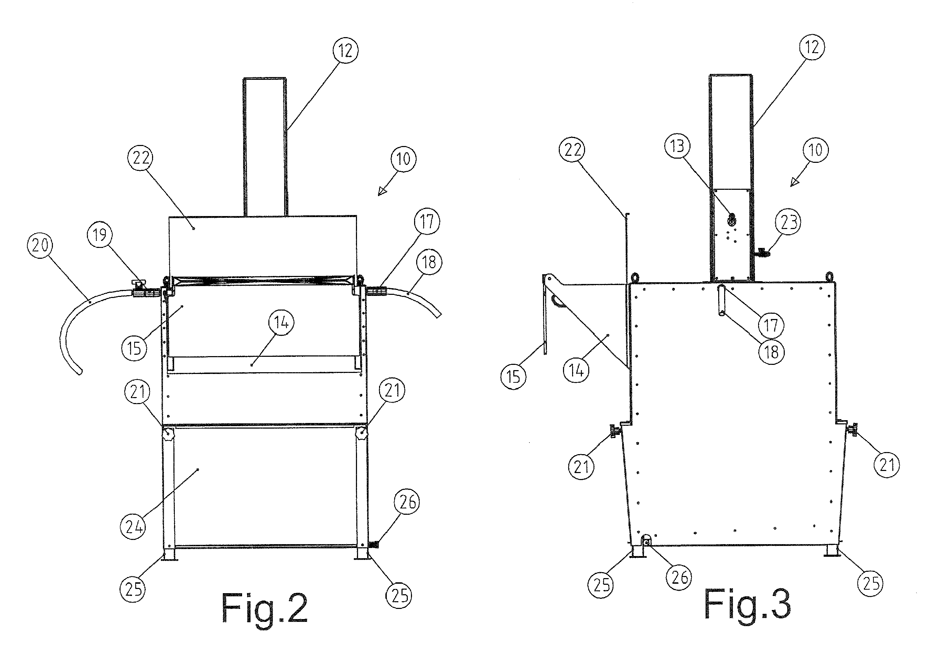

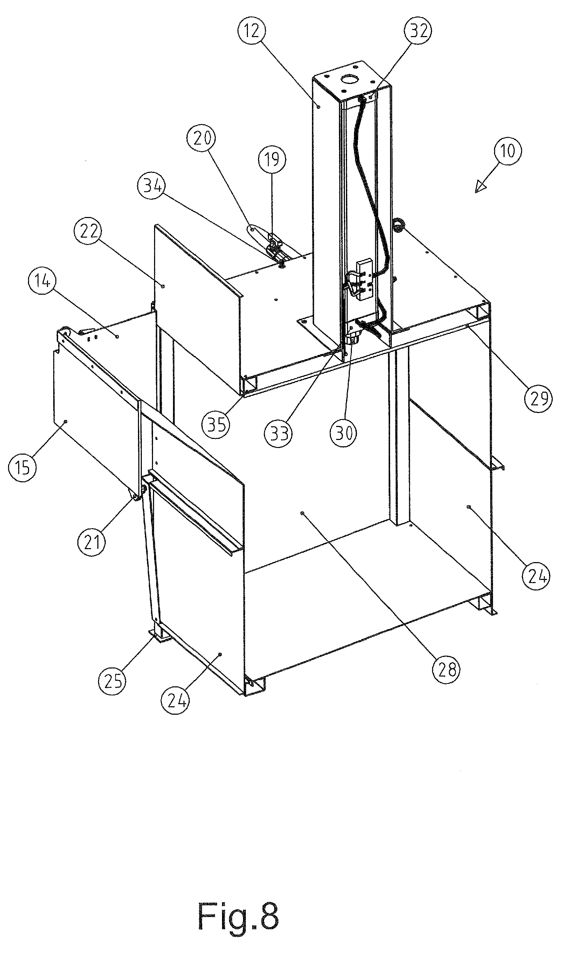

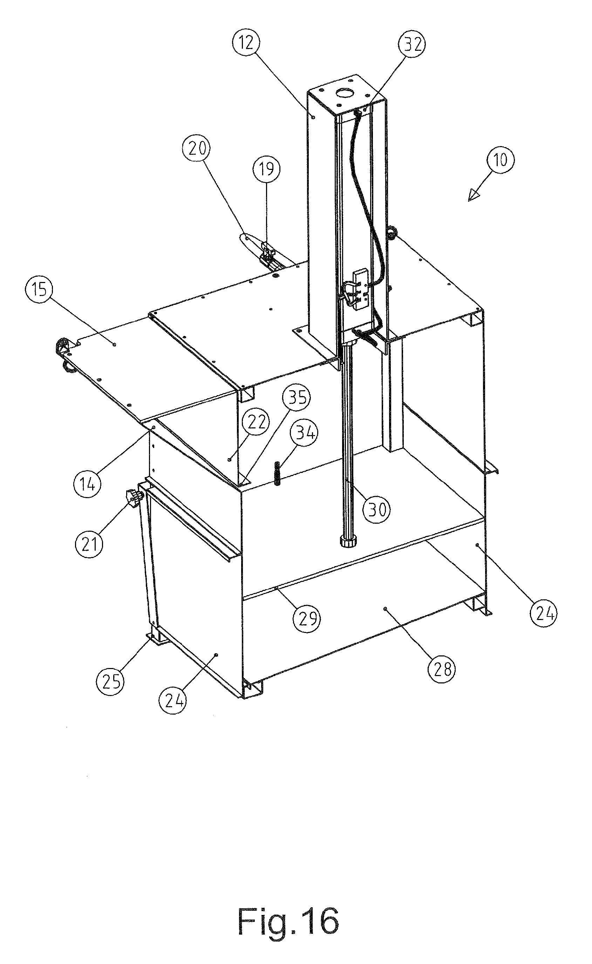

Dabei zeigen die Fig. 1 und 9 Draufsichten, die Fig. 2-5 sowie 10-13 Seitenansichten aus Richtungen A-D der Fig. 1 bzw. 9, die Fig. 6 und 7 sowie 14 und 15 Perspektivansichten sowie die Fig. 8 und 16 perspektivische Schnittansichten. Zunächst wird die Kompostiervorrichtung anhand der Fig. 1-8 in dem Zustand, in welchem kompostierbares Material zugeführt werden kann, erläutert.

Wie insbesondere in der Schnittansicht der Fig. 8 zu sehen ist, kann über eine Einfüllöffnung 14 zu kompostierendes Material in einen Behälterraum 28 einer Kompostiervorrichtung 10 eingeworfen werden. Der Behälterraum kann z.B. ein Volumen zwischen 0,2 m³ und 1 m³, z.B. ungefähr 0,5 m³ aufweisen, wobei auch andere Größen möglich sind. Eine Grundfläche des Behälterraums 28 kann z.B. 0,75 m · 0,75 m groß sein, wobei auch andere Größen möglich sind. Eine Höhe des Behälterraums 28 kann in der Größenordnung von 1 m liegen. Eine Abdeckklappe 15, mit welcher die Einfüllöffnung 14 verschlossen werden kann, ist hierfür in einem geöffneten Zustand.

Wie ebenso insbesondere in Fig. 8 zu sehen ist, ist eine Platte 29 eines Pressmechanismus, welcher später erläutert werden wird, nach oben gefahren. Dies schiebt eine Verschlussplatte 22 über einen Winkelansatz 35 ebenfalls nach oben, was die Einfüllöffnung 14 freigibt.

Die Kompostiervorrichtung 10 verfügt weiterhin über einen Wasseranschluss 19 zum Zuführen von Wasser und einen Wasserablass 17 zum Ablassen von Wasser. Der Wasseranschluss 19 sowie der Wasserablass 17 können dabei eine herkömmliche Kupplung zum einfachen Anschließen eines herkömmlichen Gartenschlauchs oder anderen Schlauchs aufweisen. Der Wasseranschluss 19 und/oder der Wasserablass 17 können einen Absperrhahn aufweisen, wie als Beispiel in den Figuren für den Wasseranschluss 19 gezeigt.

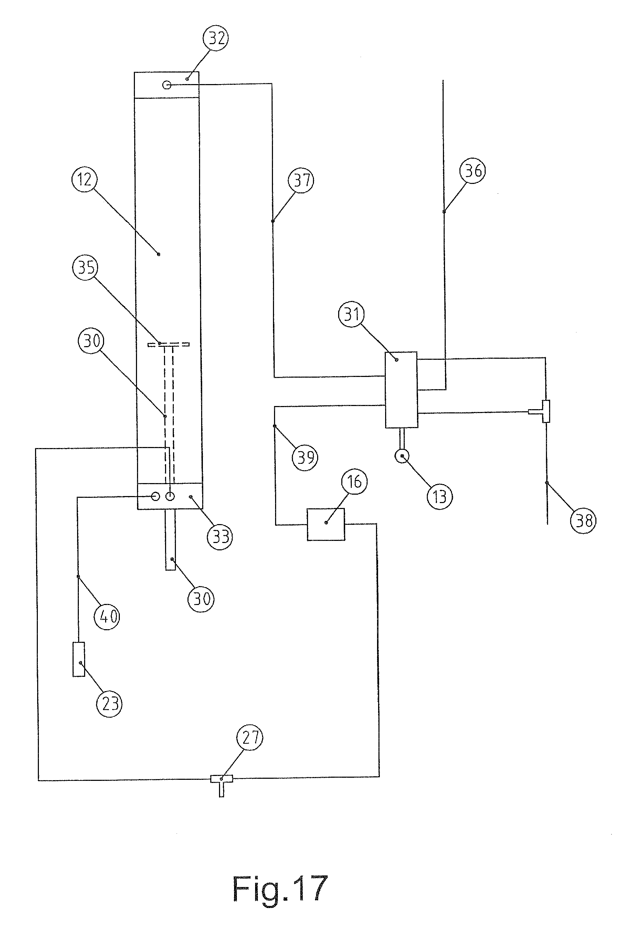

Wie später noch näher erläutert werden wird, kann über einen Schalter 13 ein Schaltmechanismus 31 so gesteuert werden, dass über den Wasseranschluss 19 zugeführtes Wasser entweder einem oberen Teil 32 oder einem unteren Teil 33 eines Zylinders 12 zugeführt wird. Eine Höhe des Zylinders 12 kann 0,7-0,8 m, z.B. ca. 0,77 m, betragen, ist aber nicht hierauf beschränkt. Hierdurch kann über eine Kolbenstange 30 die Platte 29 wahlweise nach oben oder nach unten bewegt werden. Dieser Mechanismus wird später unter Bezugnahme auf Fig. 17 noch detaillierter erläutert.

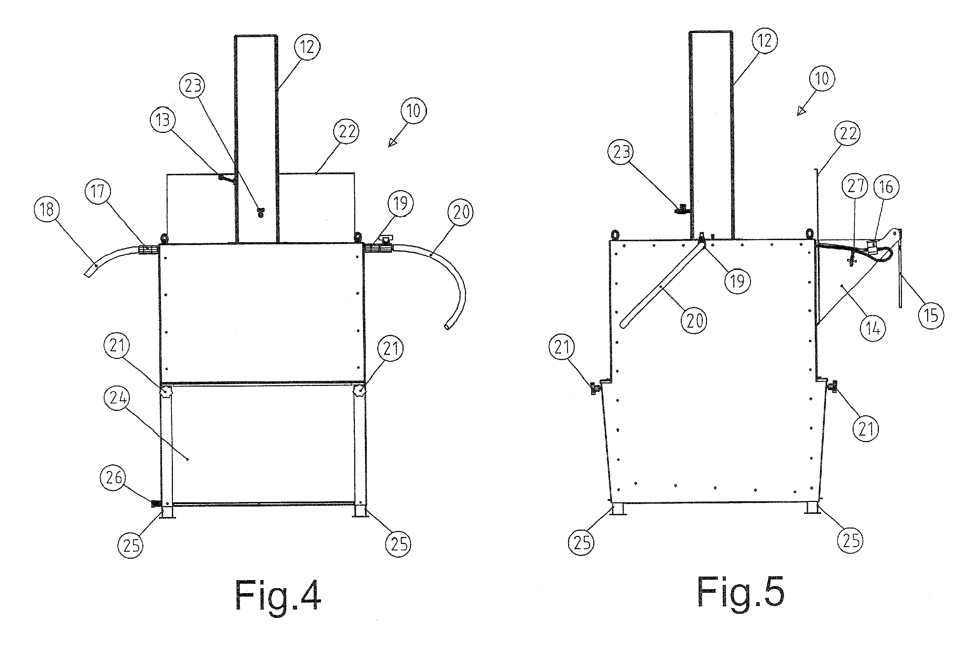

Wie insbesondere in der Seitenansicht der Fig. 5 ersichtlich weist die Kompostiervorrichtung 10 weiterhin einen seitlich an der Einfüllöffnung 14 angebrachten Sicherheitsschalter 16 auf, welcher Teil eines Wasserkreises, welcher unter Bezugnahme auf Fig. 17 erläutert werden wird, ist. Wenn die Abdeckklappe 15 geöffnet ist, sperrt beispielsweise der Sicherheitsschalter 16, so dass kein Senken der Platte 29 möglich ist, was die Sicherheit für einen Benutzer erhöht. Zudem sind ein Ablassventil 27 sowie ein Belüftungsventil 23 für den Wasserkreis bereitgestellt. Hierdurch kann beispielsweise im Winter das Wasser aus dem Wasserkreis der Kompostiervorrichtung abgelassen werden. Dabei kann mittels eines Gewindestiftes 34, welcher mit der Platte 29 verbunden ist und welcher in der Position der Fig. 8 durch ein Loch in den Deckel der Kompostiervorrichtung 10 ragt, die Platte 29 in ihrer oberen Position fixiert werden. Hierzu wird insbesondere eine Mutter 34 auf den Gewindestift 34 gedreht.

Bei dem dargestellten Ausführungsbeispiel steht die Kompostiervorrichtung auf vier Beinen 25. Bei anderen Ausführungsbeispielen kann eine andere Anzahl von Beinen oder auch eine ebene Auflagefläche bereitgestellt sein.

Bei dem dargestellten Ausführungsbeispiel weist die Kompostiervorrichtung 10 zwei gegenüberliegende Entnahmeklappen 24 auf, welche durch Schrauben 21 gesichert sind. Über die Klappen 24 kann fertiger Kompost entnommen werden. Durch zwei gegenüberliegende Klappen ist es dabei insbesondere möglich, den Kompost auf einer Seite herauszuschieben, indem von der anderen Seite entsprechender Druck ausgeübt wird. Bei anderen Ausführungsbeispielen kann auch nur eine Klappe oder können mehr als zwei Klappen zur Entnahme vorhanden sein.

Schließlich ist bei dem dargestellten Ausführungsbeispiel ein Abfluss 26 in der Nähe des Bodens des Behälterraums 28 bereitgestellt, um Flüssigkeit, insbesondere sogenanntes Substrat, welches ebenfalls zur Düngung verwendet werden kann, abzulassen.

Zum Kompostieren wird die Platte 29 durch Betätigen des Hebels 13 in die in den Fig. 1-8, insbesondere Fig. 8, dargestellte Stellung gebracht und dann die Abdeckklappe 15 geöffnet. Dann wird biologisches Material, beispielsweise Küchen- oder Gartenabfälle, zusammen mit Mikroorganismen, eingefüllt. Derartige Mikroorganismen, auch als effektive Mikroorganismen bezeichnet, werden üblicherweise mittels einer Sprühflasche in die Kompostiervorrichtung gesprüht. Dann wird die Klappe 15 geschlossen und die Platte 29 durch Betätigen des Hebels 13 abgesenkt, um das biologische Material zusammen mit den Mikroorganismen zu komprimieren und insbesondere Luft herauszudrücken. Dies führt zu einem Zustand, wie er in den Fig. 9-16 gezeigt ist.

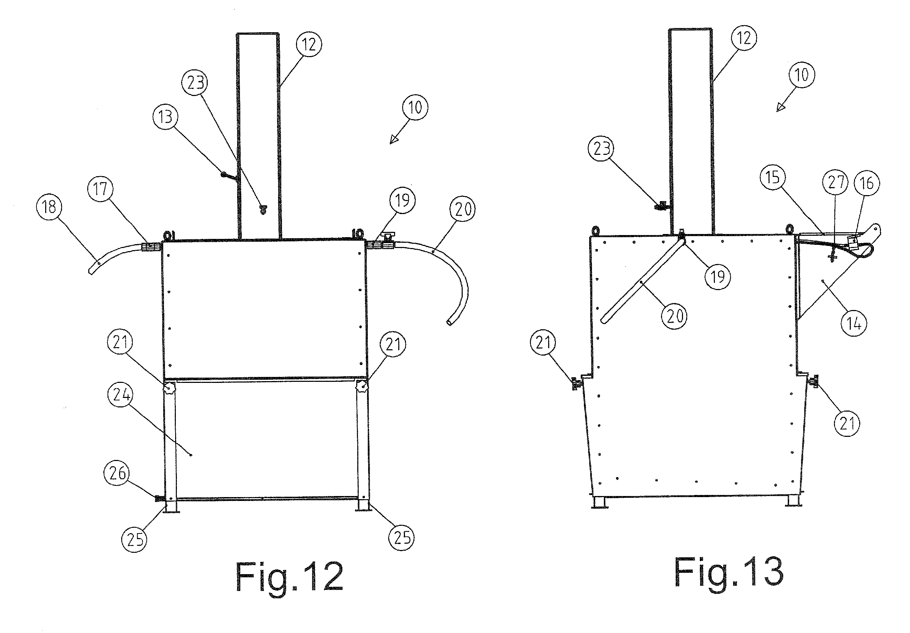

Wie bereits erwähnt entsprechen die Ansichten der Fig. 9-16 den Ansichten der Fig. 1-8. Bei dem in den Fig. 9-16 dargestellten Zustand ist die Abdeckklappe 15 auf die Einfüllöffnung 14 geklappt und deckt diese ab, so dass kein Material in den Behälterraum 28 gefüllt werden kann und insbesondere während der Bewegung der Platte 29 nicht in die Kompostiervorrichtung 10 hineingegriffen werden kann. Wie insbesondere in der Seitenansicht der Fig. 13 ersichtlich kontaktiert in geschlossenem Zustand die Abdeckklappe 15 den Sicherheitsschalter 16, welcher hierdurch den Wasserkreis zum Absenken der Platte 29 freigibt. Der abgesenkte Zustand der Platte 29 kann insbesondere in Fig. 16 gesehen werden. Eine minimale Höhe der Platte 29 über dem Boden des Behälterraums 28 kann je nach Ausführungsbeispiel variieren. Durch das Senken der Platte 29 senkt sich auch die Verschlussplatte 22, welche bei dem dargestellten Ausführungsbeispiel über den Winkelansatz 35 mit der Platte 29 interagiert, derart ab, dass die Einfüllöffnung 14 verschlossen ist. Dies verhindert, dass in dem Zustand der Fig. 16 zu kompostierendes Material in die Kompostiervorrichtung 10 eingeworfen wird, welches dann auf der Platte 29 zu liegen kommen würde.

Bei einem Ausführungsbeispiel ist eine Masse der Platte 29, gegebenenfalls zusammen mit einer Masse der Kolbenstange 30, derart gewählt, dass in der in Fig. 16 dargestellten Position allein durch das Eigengewicht der Platte 29 nach dem Komprimieren des Materials eine hinreichende Komprimierung aufrechterhalten werden kann. Die Masse der Platte 29 kann beispielsweise zwischen 15 und 60 kg liegen, kann jedoch auch weniger oder mehr betragen. Dies ermöglicht es beispielsweise, einen mit Wasseranschluss 19 verbundenen Schlauch 20 zu entfernen und für andere Zwecke, beispielsweise zur Bewässerung des Gartens, zu verwenden, ohne die Kompostierung zu stören. Auch ein mit dem Wasserablass 17 gekoppelter Schlauch 18 kann bei Bedarf entfernt werden. Zu bemerken ist, dass, wie später näher erläutert werden wird, zum Bewegen der Platte 29 über den Schlauch zugeführtes Wasser bei weiteren Bewegungen über den Schlauch 18 wieder abfließen kann und für weitere Zwecke, beispielsweise zur Bewässerung, verwendet werden kann.

Im Winter, insbesondere während Frostperioden, kann wie bereits erläutert über das Ablassventil 27 Wasser abgelassen werden und der Wasserkreis über das Belüftungsventil 23 belüftet werden. Vorher kann die Platte 29 beispielsweise in die Stellung der Fig. 1-8 gebracht werden, so dass während dieser Zeit ein Einwurf von zu kompostierendem Material möglich bleibt. Da im Winter wegen kalter Temperaturen Kompostiervorgänge ohnehin nur stark verlangsamt ablaufen und zudem allgemein weniger biologische Abfälle, insbesondere weniger Gartenabfälle, anfallen, stört dies den allgemeinen Kompostiervorgang nicht oder kaum.

Der Behälterraum 28, die Platte 29 und andere Komponenten sind bevorzugt aus Metall, insbesondere aus Stahl, hergestellt. Es sind jedoch auch andere Materialien möglich. Materialien, welche mit dem durch den Wasseranschluss 19 zugeführten Wasser in Kontakt kommen, werden bevorzugt aus rostfreien Materialien, beispielsweise Aluminium, gefertigt. Insbesondere können für einen Schaltmechanismus, welcher zum Heben und Senken der Platte 29 verwendet wird, Pneumatikkomponenten zum Einsatz kommen, da die Luft, welche bei pneumatischen Vorrichtungen verwendet wird, üblicherweise ebenfalls Feuchtigkeit enthält und diese Komponenten daher üblicherweise rostfrei ausgebildet sind.

Ein Beispiel für eine mögliche Implementierung eines Schaltmechanismus zum Heben und Senken der Platte 19 ist in Fig. 17 dargestellt. Die Implementierung der Fig. 17 dient jedoch nur als Beispiel, und es sind andere Implementierungen beispielsweise mit anderer Wasserführung und/oder anderer Anordnung der dargestellten Komponenten ebenso möglich.

Wie in Fig. 17 angedeutet setzt sich die Kolbenstange 30 in den Zylinder 12 fort, und schließt mit einer Kolbenplatte 35 ab. Ein Schlauch 36 ist mit dem Wasseranschluss 19 der Kompostiervorrichtung gekoppelt, während ein Schlauch 38 mit dem Wasserablass 17 gekoppelt ist. Zum Senken der Platte 29 wird mittels des Schalthebels 13 das Schaltventil 31 in eine Position gebracht, welche den Schlauch 36 mit einem Schlauch 37 koppelt, so dass Wasser dem Zylinder 12 in einem oberen Teil hiervon zugeführt wird. Gleichzeitig wird ein von dem unteren Teil 33 des Zylinders 12 kommender Schlauch 39 mit dem Schlauch 38 gekoppelt, so dass Wasser aus dem unteren Teil des Zylinders 12 abgelassen werden kann, wodurch die Kolbenplatte 35 und somit die Kolbenstange 30 nach unten gedrückt wird, was die Platte 29 senkt. Ist dabei das Sicherheitsventil 16 geschlossen, weil beispielsweise die Abdeckplatte 15 geöffnet ist, kann das Wasser aus dem unteren Teil des Zylinders 12 nicht abfließen, was verhindert, dass sich die Kolbenplatte 35 und die Kolbenstange 30 und somit die Platte 29 nach unten bewegen und möglicherweise einen Benutzer verletzt.

Zum Heben der Platte 29 wird umgekehrt der Hebel 13 derart betätigt, dass das Schaltventil 31 nun den Schlauch 36 mit dem Schlauch 39 verbindet sowie den Schlauch 37 mit dem Schlauch 38 verbindet. Somit wird Wasser zu dem unteren Teil 33 des Zylinders 12 zugeführt und aus dem oberen Teil 32 des Zylinders abgelassen, was die Kolbenplatte 35 und somit die Kolbenstange 30 mit der Platte 29 nach oben hebt. Wiederum erfolgt keine Bewegung, wenn das Sicherheitsventil 16 geschlossen ist. Das Schaltventil 31 sowie das Sicherheitsventil 16 arbeiten dabei bevorzugt rein mechanisch, benötigen also keinen Strom. Bei anderen Ausführungsbeispielen können Ventile mit geringer Stromaufnahme, welche beispielsweise durch Batterien bereitgestellt werden kann, bereitgestellt sein, so dass auch in diesem Fall keine externe Stromzufuhr benötigt wird. Wie aus der obigen Beschreibung ersichtlich handelt es sich hier also nicht um einen geschlossenen Hydraulikkreis mit Pumpe oder dergleichen, sondern Wasser wird extern zugeführt, z.B. durch einen Gartenschlauch, und auch nach außen abgelassen.

Ein Durchmesser der Kolbenplatte 35 kann dabei im Bereich von 80 bis 100 mm liegen und kann insbesondere abhängig davon gewählt werden, welcher Wasserdruck zur Verfügung steht und wie schwer die Platte 29 ist. Typische Wasserdrücke bei Gartenschläuchen liegen beispielsweise im Bereich von 2 bis 6 bar.

Im Winter oder sonst bei Bedarf kann wie bereits erläutert über das Ablassventil 27 im Wesentlichen das gesamte Wasser aus dem dargestellten Wasserkreis entfernt werden, wobei durch das Belüftungsventil 23 Luft zugeführt wird.

Somit wird mit der Kompostiervorrichtung 10 eine Kompostiervorrichtung bereitgestellt, bei welcher eine Kompostierung mittels Fermentation auf einfache Weise möglich ist, wobei zum Antrieb kein Strom, sondern lediglich Wasser, wie es beispielsweise ein Gartenschlauch liefert, benötigt wird. Zu bemerken ist, dass die Kompostiervorrichtung 10 lediglich als Beispiel dient und die dargestellten Prinzipien und Techniken auch anders implementiert sein können. Beispielsweise kann statt einer Kompostiervorrichtung mit einer näherungsweise quadratischen Grundfläche wie dargestellt auch eine Kompostiervorrichtung mit einer anderen Grundfläche, beispielsweise einer rechteckförmigen oder kreisförmigen Grundfläche, verwendet werden.

## Patentansprüche

1. Kompostiervorrichtung (10), umfassend:
einen Behälter (28) zum Aufnehmen von zu kompostierendem Material,
einen Wasseranschluss (19) zum Zuführen von Wasser,
einen Wasserablass (17) zum Ablassen von Wasser,
einen Pressmechanismus (12, 29, 30, 35) zum Komprimieren von in dem Behälter (28) befindlichem Material, und
einen Schaltmechanismus (13, 31) zum wahlweisen Zuführen von Wasser von dem Wasseranschluss (19) zu dem Pressmechanismus (12, 29, 30, 35) und Ablassen von Wasser aus dem Pressmechanismus (12, 29, 30, 35) zu dem Wasserablass (17) derart, dass der Pressmechanismus wahlweise zwischen einem ersten Zustand, in welchem das Material in dem Behälter (28) komprimiert wird, und einem zweiten Zustand zum Befüllen des Behälters (28) bewegt wird.

2. Kompostiervorrichtung (10) nach Anspruch 1, wobei der Schaltmechanismus (13, 31) rein mechanisch arbeitet.

3. Kompostiervorrichtung (10) nach Anspruch 1 oder 2, wobei der Pressmechanismus einen Zylinder (12) und einen in dem Zylinder (12) bewegbare Kolbenstange (30) umfasst, wobei der Schaltmechanismus (13, 31) zum Bewegen des Pressmechanismus in die erste Position eingerichtet ist, einen ersten Teil (32) des Zylinders (12) Wasser zuzuführen und Wasser aus einem zweiten Teil (33) des Zylinders abzulassen.

4. Kompostiervorrichtung (10) nach Anspruch 1, wobei der Schaltmechanismus (13, 31) weiter eingerichtet ist, zum Bewegen des Pressmechanismus (12, 29, 30, 35) in die zweite Position Wasser zu dem zweiten Teil (33) des Zylinders (12) zuzuführen und aus dem ersten Teil (32) des Zylinders abzulassen.

5. Kompostiervorrichtung (10) nach Anspruch 3 oder 4, weiter umfassend eine mit der Kolbenstange (30) gekoppelte Platte (29) zum Komprimieren des in dem Behälter (28) befindlichen Materials.

6. Kompostiervorrichtung (10) nach Anspruch 5, wobei die Platte (29) eine Masse zwischen 15 kg und 60 kg aufweist.

7. Kompostiervorrichtung (10) nach einem der Ansprüche 1-6, weiter umfassend eine Einfüllöffnung (14) zum Befüllen des Behälters (28) mit zu kompostierendem Material.

8. Kompostiervorrichtung (10) nach Anspruch 7, weiter umfassend eine Abdeckung (15) zum Abdecken der Einfüllöffnung (14) und einen Sicherheitsschalter, welcher durch die Abdeckung (15) derart betätigbar ist, dass eine Bewegung des Pressmechanismus (12, 29, 30, 35) blockiert wird, wenn die Position der Abdeckung (15) ein Einfüllen von Material durch die Einfüllöffnung (14) gestattet.

9. Kompostiervorrichtung (10) nach Anspruch 7 oder 8, weiter umfassend ein mit dem Pressmechanismus (12, 29, 30, 35) gekoppeltes Verschlusselement (35), welches derart eingerichtet ist, dass das Verschlusselement (35) in der ersten Position des Pressmechanismus (12, 29, 30, 35) die Einfüllöffnung (14) verschließt und in der zweiten Position des Pressmechanismus (12, 29, 30, 35) die Einfüllöffnung (14) freigibt.

10. Kompostiervorrichtung (10) nach einem der Ansprüche 1-9, weiter umfassend eine in der Nähe eines Bodens des Behälters (20) angeordnete Ablassöffnung (26) zum Ablassen von Substrat.

11. Kompostiervorrichtung (10) nach einem der Ansprüche 1-10, weiter umfassend einen Mechanismus (34) zum Arretieren des Pressmechanismus (12, 29, 30, 35) in der zweiten Position.

12. Kompostiervorrichtung (10) nach einem der Ansprüche 1-11, weiter umfassend zwei an gegenüberliegenden Seiten der Kompostiervorrichtung (10) angeordnete Klappen (24) zum Entnehmen von Kompost aus der Kompostiervorrichtung (10).

13. Kompostiervorrichtung (10) nach einem der Ansprüche 1-12, wobei der Schaltmechanismus (13, 31) weiterhin ein Ablassventil (27) zum Ablassen von Wasser aus dem Schaltmechanismus (13, 31) umfasst.
